# EUROPÄISCHE PATENTSCHRIFT

(11) **EP 1 910 021 B1**
(45) Veröffentlichungstag und Bekanntmachung des Hinweises auf die Patenterteilung: **22.07.2009**
(21) Anmeldenummer: 06742630.4
(22) Anmeldetag: 21.04.2006
(51) Int. Cl.: B23Q 5/04

(54) **WERKZEUGREVOLVER**
TOOL REVOLVER
TOURELLE PORTE-OUTIL

(30) Priorität: 20.07.2005 DE 102005033890
(43) Veröffentlichungstag der Anmeldung: 16.04.2008
(60) Teilanmeldung: 09006780.2
(73) Patentinhaber: Sauter Feinmechanik GmbH, D-72555 Metzingen (DE)
(72) Erfinder: SAHM, Detlef, 73669 Lichtenwald (DE); LINDER, Dietmar, 72581 Dettingen (DE); DIERINGER, Jochen, 72379 Hechingen-Stetten (DE)
(74) Vertreter: Bartels, Martin Erich Arthur
(86) Internationale Anmeldenummer: PCT/EP2006/003667
(87) Internationale Veröffentlichungsnummer: WO 2007/009515

(56) Entgegenhaltungen:
- US-A- 5 455 993
- US-A1- 2003 046 799
- PATENT ABSTRACTS OF JAPAN Bd. 010, Nr. 196 (M-497), 10. Juli 1986 (1986-07-10) & JP 61 038806 A (ROBOTSUTO GIKEN KK), 24. Februar 1986 (1986-02-24)
- PATENT ABSTRACTS OF JAPAN Bd. 2002, Nr. 04, 4. August 2002 (2002-08-04) & JP 2001 341009 A (NITTO SEIKO CO LTD), 11. Dezember 2001 (2001-12-11)

## Beschreibung

Die Erfindung bezieht sich auf einen Werkzeugrevolver mit einem an einer Werkzeugmaschine anzubringenden oder angebrachten Grundkörper gemäß der Merkmalsausgestaltung des Oberbegriffes des Patentanspruches 1.

Die US 6,704,983 B2 zeigt einen Werkzeugrevolver, der für den Einsatz bei Drehmaschinen, Bearbeitungszentren und ähnlichen Vorrichtungen, wie Werkzeugmaschinen, vorgesehen ist. Bei der Benutzung solcher Werkzeugrevolver handelt es sich bei den an den Werkzeugstationen des Revolverkopfes befindlichen Werkzeugen, die zum Einsatz kommen sollen, hauptsächlich um Werkzeuge zur spanabhebenden Bearbeitung, wie Bohr-, Dreh- oder Fräswerkzeuge, wobei zum Anpassen an die jeweilige Bearbeitungsaufgabe die Werkzeuge vom Maschinenbediener gewechselt werden. Regelmäßig kommen bei derartigen Bearbeitungsvorgängen Hilfsmedien, insbesondere in Form von Kühlschmierstoffen zum Einsatz und es besteht grundsätzlich die Gefahr, dass das dahingehende Kühlschmierstoffmittel zusammen mit den bei der Bearbeitung entstehenden Spänen in den Innenraum der Werkzeugscheibe gelängt, was den dort befindlichen Werkzeugantrieb zerstören kann. Letzteres gilt insbesondere dann, wenn durch das eindringende Fluid die Späne oder sonstige Schmutz- sowie Abriebpartikel mitgeführt werden und zu dem im Inneren der Werkzeugscheibe befindlichen Werkzeugantrieb gelangen.

Durch PATENT ABSTRACTS OF JAPAN Bd. 010, Nr. 196 (M-497), 10.Juli 1986 (1986-07-10) & JP 61 038806 A (ROBOTSUTO GIKEN KK), 24. Februar 1986 (1986-02-24) ist ein gattungsgemäßer Werkzeugrevolver bekannt mit einem an einer Werkzeugmaschine anzubringenden oder angebrachten Grundkörper, der eine Revolverachse definiert, um die drehbar am Grundkörper eine Werkzeugscheibe gelagert ist, die mehrere, an ihrem Umfang verteilte Werkzeugstationen aufweist, die durch Drehen der Werkzeugscheibe jeweils in mindestens eine Arbeitsposition einstellbar sind, in der ein am Grundkörper angebrachter, im Inneren der Werkzeugscheibe befindlicher Werkzeugantrieb mit seinem antriebsseitigen Kupplungsteil mit einem werkzeugseitigen Antriebsteil für den Antrieb eines Werkzeuges in Kupplungseingriff kommt, das sich an der auf die Arbeitsposition ausgerichteten Werkzeugstation befindet, wobei in jeder Werkzeugstation ein das werkzeugseitige Kupplungsteil bildendes Antriebsteil drehbar gelagert ist, mit dem die Werkzeugaufnahme des jeweiligen, an der Werkzeugstation betreibbaren Werkzeugs in Antriebsverbindung bringbar ist, und wobei an jedem Antriebsteil eine Dichtungsanordnung vorgesehen ist, die an der jeweiligen Werkzeugstation das Innere der Werkzeugscheibe gegenüber der Außenseite abdichtet.

Bei der bekannten Lösung ist die Dichtungsanordnung durch eine Art Labyrinthdichtung realisiert, die im Bereich der jeweiligen Werkzeugstation, die das Bearbeitungswerkzeug aufnimmt, das Innere der Werkzeugscheibe gegenüber der Umgebung abdichtet. Insoweit ist das Innere der Werkzeugscheibe gegen einen Eintritt von Fluiden und Spänen wirksam geschützt, wobei die bekannte Lösung noch Wünsche offen läßt, was einen störungsfreien Eingriff zwischen dem Antriebsteil für das jeweilige Bearbeitungswerkzeug und dem inneren, antriebsseitigen Kupplungsteil für den dahingehenden Antrieb anbelangt.

Im Hinblick hierauf stellt sich die Erfindung die Aufgabe, einen Werkzeugrevolver zur Verfügung zu stellen, der nicht nur das Innere der Werkzeugscheibe wirksam gegen einen Eintritt von Fluiden und Spänen schützt, sondern auch einen störungsfreien Eingriff zwischen einem Antriebsteil für den Antrieb eines Bearbeitungswerkzeuges und einem inneren, antriebsseitigen Kupplungsteil für den dahingehenden Antrieb erlaubt.

Erfindungsgemäß ist diese Aufgabe durch einen Werkzeugrevolver gelöst, der die Merkmale des Patentanspruches 1 in seiner Gesamtheit aufweist.

Dadurch, dass gemäß dem kennzeichnenden Teil des Patentanspruches 1 jedes Antriebsteil über einen Großteil seiner axialen Länge einen Rotationskörper mit kreiszylindrischem Umfang bildet und in seinem dem antriebsseitigen Kupplungsteil des inneren Werkzeugantriebes benachbarten, endseitigen Umfangsabschnitt mindestens eine ebene Führungsfläche aufweist, die Bestandteil einer die Drehposition des Antriebsteiles beim Drehen der Werkzeugscheibe fixierenden Verdrehsicherung bildet, ist sichergestellt, dass beim Drehen der Werkzeugscheibe und dem Einlaufen einer Werkzeugstation in die Arbeitsposition jeweils ein störungsfreier Eingriff zwischen dem Antriebsteil und dem inneren, antriebsseitigen Kupplungsteil erfolgt.

Da an jedem Antriebsteil eine Dichtungsanordnung vorgesehen ist, die an jeder Werkzeugstation das Innere der Werkzeugscheibe gegenüber der Außenseite abdichtet, ist die Werkzeugscheibe an ihrer gesamten Außenseite gegen einen Fluidzutritt und gegenüber eindringenden Spänen gesichert. Die dahingehende Abdichtung ist an jeder Werkzeugstation wirksam, weil jede Werkzeugstation mit einem Antriebsteil versehen ist, das in Doppelfunktion sowohl als Antriebs-Zwischenelement als auch als Dichtelement fungiert. Die Abdichtung der Werkzeugscheibe ist auch dann gewährleistet, wenn sich nicht an jeder Werkzeugstation eine Werkzeugaufnahme befindet.

Vorzugsweise ist die Dichtungsanordnung, die an jeder Werkzeugstation in Zusammenwirkung mit dem Antriebsteil das Innere der Werkzeugscheibe zur Außenseite hin abdichtet, an dem dem Außenumfang der Werkzeugscheibe benachbarten, äußeren kreiszylindrischen Endbereich des Antriebsteiles vorgesehen. In vorteilhafter Weise kann zu diesem Zweck eine Wellendichtung, beispielsweise in Form eines berührenden Radialwellendichtringes vorgesehen sein.

Als werkzeugseitiges, insbesondere revolverseitiges Kupplungsteil kann am jeweiligen Antriebsteil eine diametrale, durchgehende Nut vorgesehen sein, die an dem dem Inneren der Werkzeugscheibe zugekehrten Ende des Antriebsteiles offen ist und deren ebene Seitenwände zu der zumindest einen Führungsfläche parallele Ebenen bilden.

Da die Führungsfläche an den Antriebsteilen Bestandteil einer die Drehposition des Antriebsteiles beim Drehen der Werkzeugscheibe fixierenden Verdrehsicherung bilden kann, eröffnet sich die Möglichkeit, das Antriebsteil vor der Drehbewegung der Werkzeugscheibe in eine solche Drehposition einzustellen, dass die Längsachse der Nut auf die Richtung der Bewegungsbahn beim Drehen ausgerichtet ist, so dass die Kupplungsverbindung durch Einfahren des antriebsseitigen Kupplungsteiles des im Inneren der Werkzeugscheibe befindlichen Werkzeugantriebes in die Nut hergestellt werden kann. Zu diesem Zweck kann als antriebsseitiges Kupplungsteil des inneren Werkzeugantriebes ein Antriebszapfen mit rechteckförmigem Umriß vorgesehen sein, der in der Nut des Antriebsteiles passend aufnehmbar und bei Drehbewegungen der Werkzeugscheibe durch die Nut hindurch bewegbar ist.

Die Verdrehsicherung für die Antriebsteile kann einen Führungskörper aufweisen, der zwischen den Werkzeugstationen eine zur Revolverachse konzentrisch verlaufende Führungsbahn bildet, die sich entlang der vom jeweiligen Antriebsteil beim Drehen der Werkzeugscheibe durchlaufenen Bewegungsbahn erstreckt und entlang deren die jeweilige Führungsfläche des Antriebsteiles beim Drehen der Werkzeugscheibe anliegend geführt ist.

Damit bei derart drehpositioniertem Antriebsteil der Antriebszapfen des inneren Werkzeugantriebes in die Nut des in die Arbeitsposition jeweils einfahrenden Antriebsteiles störungsfrei eintreten kann, ist es erforderlich den Antriebszapfen des inneren Werkzeugantriebes vor Einleiten einer Drehbewegung der Werkzeugscheibe in eine Drehstellung zu bringen, bei der die Seitenwände der Nut des mit dem Antriebszapfen in Kupplungsverbindung stehenden Antriebsteiles und die jeweilige Führungsfläche des Antriebsteiles in zur Führungsbahn parallelen Ebenen liegen.

Wenn es sich bei dem im Inneren der Werkzeugscheibe befindlichen Werkzeugantrieb um einen Elektromotor handelt, dessen Rotorwelle zum Antriebsteil der jeweils in der Arbeitsposition befindlichen Werkzeugstation konzentrisch ist und an ihrem Wellenende den Antriebszapfen bildet, kann ein eine elektrische Drehpositionsbestimmung des Rotors und damit des Antriebszapfens ermöglichender Elektromotor eingesetzt werden. Auch besteht die Möglichkeit über entsprechende Sensoren eine Drehposition zur Bestimmung des Rotors vorzunehmen.

Nachstehend ist die Erfindung anhand eines in der Zeichnung dargestellten Ausführungsbeispieles im einzelnen erläutert. Es zeigen:
- Fig. 1 einen Axialschnitt der an einem abgebrochen gezeichneten Grundkörper gelagerten Werkzeugscheibe des Ausführungsbeispieles des erfindungsgemäßen Werkzeugrevolvers, wobei eine auf die Arbeitsposition ausgerichtete Werkzeugstation sowie eine herkömmliche, an dieser Werkzeugstation anzubringende Werkzeugaufnahme (vor dem Anbringen und ohne darin befindliches Bearbeitungswerkzeug) gezeigt sind;
- Fig. 2 eine gegenüber Fig. 1 vergrößert, abgebrochen, perspektivisch und schematisch vereinfacht gezeichnete Teildarstellung nur des Bereiches der in Arbeitsposition befindlichen Werkzeugstation und
- Fig. 3 eine schematische Diagrammdarstellung zur Erläuterung der Funktionsweise einer Verdrehsicherung anhand einer Schnittdarstellung entsprechend der Linie III-III von Fig. 2.

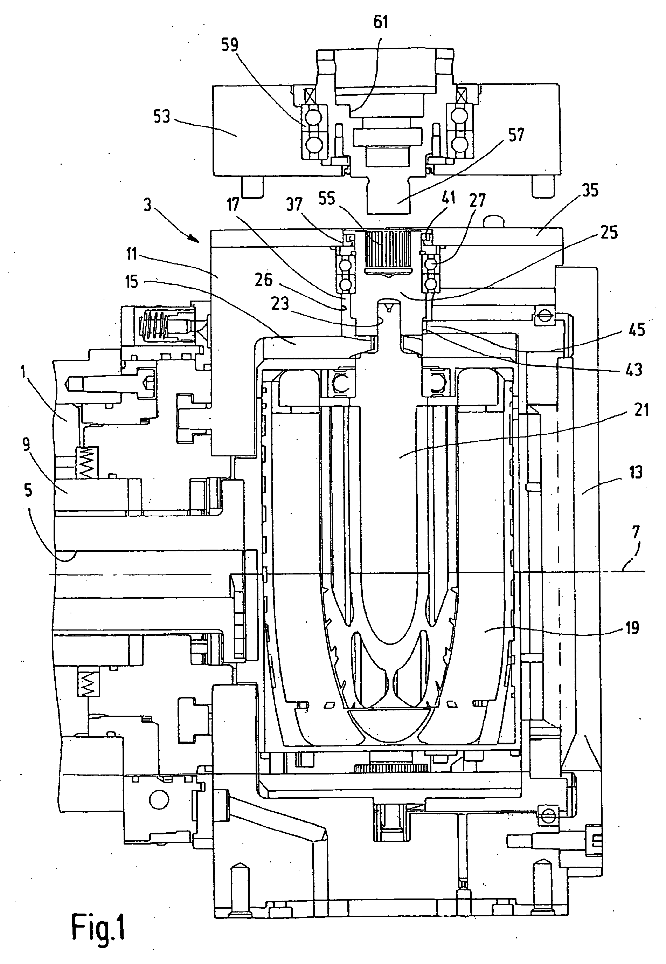

Fig. 1 zeigt in abgebrochener Darstellung lediglich einen Endbereich eines Grundkörpers 1, der mit einer (nicht dargestellten) Werkzeugmaschine verbindbar ist und an der eine als Ganzes mit 3 bezeichnete Werkzeugscheibe gelagert ist. Der Grundkörper 1 weist eine zentrale, stationäre Hohlwelle 5 auf, die eine Revolverachse 7 definiert, um die die Werkzeugscheibe 3 drehbar ist. Der Antrieb für die Drehbewegung um die Revolverachse 7 erfolgt von einem nicht näher dargestellten Werkzeugscheibenantrieb über ein die Hohlwelle 5 umgebendes Antriebsrohr 9. Insbesondere ist die dahingehende Drehbewegung in der Art eines Schwenkantriebes ausgeführt.

Die Werkzeugscheibe 3 weist ein Scheibenkopfgehäuse 11 auf, das zusammen mit einer mit dem Gehäuse 11 verschraubten, frontseitigen Dekkelplatte 13 einen Innenraum 15 im Werkzeugscheibengehäuse 11 umschließt.

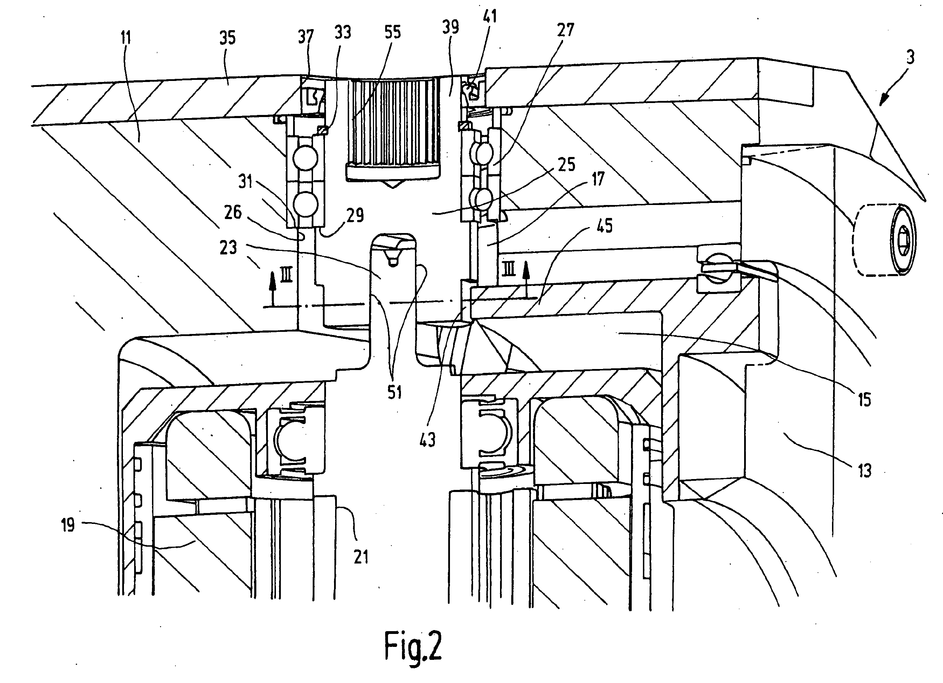

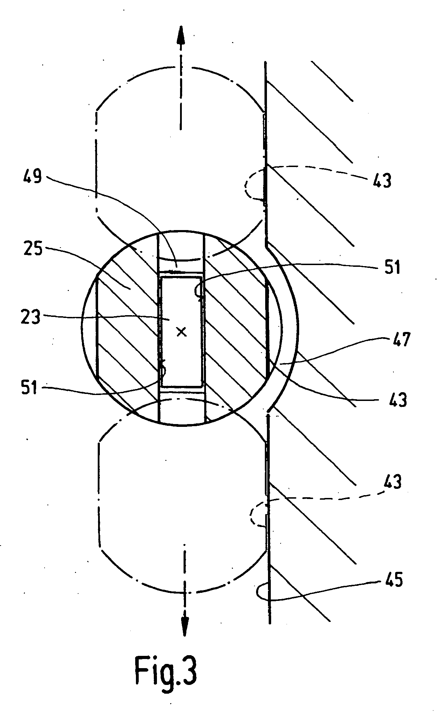

Die Werkzeugscheibe 3 weist an ihrem Umfang eine Mehrzahl von in gleichen gegenseitigen Winkelabständen voneinander angeordneter Werkzeugstationen 17 auf, die, bezogen auf die Revolverachse 7, radial ausgerichtet sind. Die Fig. 1 und 2 zeigen, dass eine der Werkzeugstationen 17 auf die Arbeitsposition eingestellt ist, in der ein im Innenraum 15 der Werkzeugscheibe 3 befindlicher Werkzeugantrieb über sein antriebsseitiges Kupplungsteil ein an der in Arbeitsposition befindlichen Werkzeugstation angebrachtes Bearbeitungswerkzeug antreiben kann. Beim vorliegenden Beispiel weist der Werkzeugantrieb einen im Innenraum 15 gelegenen, mit dem Grundkörper 1 über die Hohlwelle 5 fest verbundenen Elektromotor 19 auf, wobei die Drehachse seiner Rotorwelle 21 koaxial zu der in die Arbeitsposition eingestellten Werkzeugstation 17 ist. Als antriebsseitiges Kupplungsteil bildet die Rotorwelle 21 in ihrem Endabschnitt einen Antriebszapfen 23, der, siehe Fig. 3, einen rechteckigen Querschnitt besitzt. Als mit dem antriebsseitigen Kupplungsteil zusammenwirkendes, werkzeugseitiges Kupplungsteil ist in jeder Werkzeugstation 17 ein Antriebsteil 25 vorgesehen. Jedes Antriebsteil 25 ist in einer betreffenden Durchgangsöffnung 26 des Werkzeugscheibengehäuses 11, die sich in diesem in Radialrichtung erstreckt, drehbar gelagert, und zwar mittels einer Wälzlagerung 27, die sich an einem kreiszylindrischen Umfangsabschnitt des Antriebsteiles 25 befindet.

Wie am deutlichsten aus Fig. 2 zu ersehen ist, sind die Innenwand der Durchgangsöffnung 26 und der kreiszylindrische Umfangsabschnitt des Antriebsteiles 25 jeweils gestuft, so dass sich Schulterflächen 31 bzw. 29 bilden, an denen die Wälzlagerung 27 in Zusammenwirkung mit einem in einer Umfangsnut des Antriebsteiles 25 sitzenden Sicherungsring 33 (Fig. 2) das Antriebsteil 25 axial sichert.

Am radial außenliegenden Ende erstreckt sich im Bereich jeder Werkzeugstation 17 an der Außenseite der Werkzeugscheibe 3 eine Verschlußplatte 35 mit einer zur jeweiligen Werkzeugstation 17 konzentrischen Öffnung 37. Der Durchmesser dieser Öffnung 37 ist größer als der Außendurchmesser des sich in dieser Öffnung 37 erstreckenden kreiszylindrischen Endabschnittes 39 des Antriebsteiles 25. In dem so gebildeten Zwischenraum ist eine Wellendichtung angeordnet, bei der es sich im vorliegenden Fall um einen Radialwellendichtring 41 handelt. Wie aus den Fig. zu ersehen ist, ist dadurch an jeder Werkzeugstation 17 die Öffnung 37 der äußeren Platte 35 gegenüber dem Antriebsteil 25 abgedichtet, so dass wiederum an jeder Werkzeugstation 17 eine Abdichtung zwischen dem Innenraum 15 der Werkzeugscheibe 3 und der Außenseite gegeben ist.

Wie am deutlichsten aus den Fig. 2 und 3 zu ersehen ist, befinden sich am radial innenliegenden Endbereich jedes Antriebsteiles 25 Abflachungen 43, die sich an den kreiszylindrischen Umfangsabschnitt anschließen und die jeweils eine ebene Führungsfläche bilden, die Teil einer Verdrehsicherung für das jeweilige Antriebsteil 25 sind. Diese jeweilige Führungsfläche an den Abflachungen 43 ist bei der Drehbewegung der Werkzeugscheibe 3 entlang eines Führungskörpers 45 geführt, der eine nur im Bereich 47 (Fig. 3) an mindestens einer Werkzeugstation 17 unterbrochene Führungsbahn zwischen den Werkzeugstationen 17 bildet, an der die Antriebsteile 25 mit der an den Abflachungen 43 gebildeten Führungsfläche bei Drehbewegungen der Werkzeugscheibe 3 anliegend geführt und damit gegen Verdrehen gesichert sind.

Um diesen Betriebsablauf zu ermöglichen, weist der Elektromotor 19 eine Einrichtung zur Bestimmung der Drehposition der Rotorwelle 21 und damit des Antriebszapfens 23 auf, so dass das jeweilige Antriebsteil 25, bevor es aus der Arbeitsposition durch Drehen der Werkzeugscheibe 3 heraus bewegt wird, die in Fig. 3 gezeigte Drehposition einnimmt, in der die Abflachungen 43 mit der Führungsbahn am Führungskörper 45 fluchten.

Außerdem befindet sich, wie ebenfalls aus Fig. 3 deutlich zu ersehen ist, im Antriebskörper 25 eine endseits offene, diametral durchgehende Nut 49 mit parallelen Seitenwänden 51, die zu den Abflachungen 43 parallele Ebenen bilden und zwischen denen der Antriebszapfen 23 passend aufgenommen ist. Diese Maßnahmen stellen in Zusammenwirkung sicher, dass bei der Drehbewegung der Werkzeugscheibe 3 um die Revolverachse 7 der Antriebszapfen 23 auf betriebssichere Weise in und außer Eingriff mit der Nut 49 im Antriebsteil 25 einer jeweils betreffenden Werkzeugstation 17 gelangen kann. Als Antriebsmotor kann ein handelsüblicher Elektro-Servomotor dienen. Bei kleineren Baugrößen des Werkzeugrevolvers kann auch ein Winkelgetriebe mit Elektromotor vorgesehen sein, der außerhalb der Werkzeugscheibe 3 (nicht dargestellt) anordenbar ist.

Wie die Fig. 1 und 2 zeigen, weist das Antriebsteil 25 am radial außenliegenden Ende für die Bildung der Antriebsverbindung mit einer an der betreffenden Werkzeugstation zu betreibenden Werkzeugaufnahme 53 einen am Außenumfang der Werkzeugscheibe 3 offenen Sitz 55 auf, der eine innere axiale Mitnahmeverzahnung üblicher Art aufweist, mit der ein komplementär verzahnter Antriebsschaft 57 der an der betreffenden Werkzeugstation 17 anbringbaren Werkzeugaufnahme 53 in Eingriff bringbar ist. Fig. 1 zeigt dabei eine Werkzeugaufnahme 53 herkömmlicher Art (HSK-Typ) ohne in die Werkzeugaufnahme 53 eingesetztes Bearbeitungswerkzeug und vor dem Anbringen an der äußeren Verschlußplatte 35 an der Werkzeugstation 17 (beispielsweise durch Verschrauben). Wie Fig. 1 zeigt, ist bei einer derartigen Werkzeugaufnahme 53 der Antriebsschaft 57 in Form eines Rotationskörpers ausgebildet, der an der Werkzeugaufnahme 53 mittels Wälzlagern 59 gelagert ist und einen gestuften inneren Hohlraum 61 als Sitz für den Werkzeughalter des eigentlichen Bearbeitungswerkzeuges aufweist.

## Patentansprüche

1. Werkzeugrevolver mit einem an einer Werkzeugmaschine anzubringenden oder angebrachten Grundkörper (1), der eine Revolverachse (7) definiert, um die drehbar am Grundkörper (1) eine Werkzeugscheibe (3) gelagert ist, die mehrere, an ihrem Umfang verteilte Werkzeugstationen (17) aufweist, die durch Drehen der Werkzeugscheibe (3) jeweils in mindestens eine Arbeitsposition einstellbar sind, in der ein am Grundkörper (1) angebrachter, im Inneren (15) der Werkzeugscheibe (3) befindlicher Werkzeugantrieb (19) mit seinem antriebsseitigen Kupplungsteil (23) mit einem werkzeugseitigen Antriebsteil für den Antrieb eines Werkzeuges in Kupplungseingriff kommt, das sich an der auf die Arbeitsposition ausgerichteten Werkzeugstation (17) befindet, wobei in jeder Werkzeugstation (17) ein das werkzeugseitige Kupplungsteil bildendes Antriebsteil (25) drehbar gelagert ist, mit dem die Werkzeugaufnahme (53) des jeweiligen, an der Werkzeugstation (17) betreibbaren Werkzeugs in Antriebsverbindung bringbar ist, und wobei an jedem Antriebsteil (25) eine Dichtungsanordnung (41) vorgesehen ist, die an der jeweiligen Werkzeugstation (17) das Innere (15) der Werkzeugscheibe (3) gegenüber der Außenseite abdichtet, **dadurch gekennzeichnet, dass** jedes Antriebsteil (25) über einen Großteil seiner axialen Länge einen Rotationskörper mit kreiszylindrischem Umfang bildet und in seinem dem antriebsseitigen Kupplungsteil (23) des inneren Werkzeugantriebes (19) benachbarten, endseitigen Umfangsabschnitt mindestens eine ebene Führungsfläche (43) aufweist, die Bestandteil einer die Drehposition des Antriebsteiles (25) beim Drehen der Werkzeugscheibe (3) fixierenden Verdrehsicherung bildet.

2. Werkzeugrevolver nach Anspruch 1, **dadurch gekennzeichnet, dass** die Dichtungsanordnung (41) an dem dem Außenumfang der Werkzeugscheibe (3) benachbarten, äußeren kreiszylindrischen Endbereich (39) des Antriebsteiles (25) vorgesehen ist.

3. Werkzeugrevolver nach Anspruch 1 oder 2, **dadurch gekennzeichnet, dass** als werkzeugseitiges Kupplungsteil am jeweiligen Antriebsteil (25) eine diametrale, durchgehende Nut (49) vorgesehen ist, die an dem dem Inneren (15) der Werkzeugscheibe (3) zugekehrten Ende des Antriebsteiles (25) offen ist und deren ebene Seitenwände (51) zu der zumindest einen Führungsfläche (43) parallele Ebenen bilden.

4. Werkzeugrevolver nach Anspruch 3, **dadurch gekennzeichnet, dass** das antriebsseitige Kupplungsteil (23) des im Inneren der Werkzeugscheibe (3) befindlichen Werkzeugantriebes (19) mindestens einen Antriebszapfen mit rechteckförmigem Querschnitt aufweist, der in der Nut (49) des Antriebstei les (25) passend aufnehmbar und bei Drehbewegungen der Werkzeugscheibe (3) durch die Nut (49) hindurch bewegbar ist.

5. Werkzeugrevolver nach Anspruch 4, **dadurch gekennzeichnet, dass** die Verdrehsicherung für die Antriebsteile (25) einen Führungskörper aufweist, der zwischen den Werkzeugstationen (17) eine zur Revolverachse (7) konzentrisch verlaufende Führungsbahn (45) bildet, die sich entlang der vom jeweiligen Antriebsteil (25) beim Drehen der Werkzeugscheibe (3) durchlaufenen Bewegungsbahn erstreckt und entlang deren die jeweilige Führungsfläche (43) des Antriebsteiles (25) beim Drehen der Werkzeugscheibe (3) anliegend geführt ist.

6. Werkzeugrevolver nach Anspruch 5, **gekennzeichnet durch** eine Einrichtung zur Drehpositionierung des antriebsseitigen Kupplungsteiles des Werkzeugantriebes (19) dergestalt, dass dessen Antriebszapfen (23) das Antriebsteil (25) in eine Drehstellung bringt, in der die Seitenwände (51) der Nut (49) und die jeweilige Führungsfläche (43) des Antriebsteiles (25) in zur Führungsbahn (45) parallelen Ebenen liegen.

7. Werkzeugrevolver nach Anspruch 6, **dadurch gekennzeichnet, dass** der im Inneren (15) der Werkzeugscheibe (3) befindliche Werkzeugantrieb einen Elektromotor (19) aufweist, dessen Rotorwelle (21) zum Antriebsteil (25) der jeweils in der Arbeitsposition befindlichen Werkzeugstation (17) konzentrisch ist und an ihrem Wellenende den Antriebszapfen (23) bildet.

8. Werkzeugrevolver nach Anspruch 7, **dadurch gekennzeichnet, dass** ein eine elektrische Drehpositionsbestimmung des Rotors (21) ermöglichender Elektromotor (19) vorgesehen ist.

9. Werkzeugrevolver nach einem der Ansprüche 1 bis 8, **dadurch gekennzeichnet, dass** jedes Antriebsteil (25) zur Bildung der Antriebsverbindung mit der Werkzeugaufnahme (53) des an der betreffenden Werkzeugstation (17) zu betreibenden Werkzeuges einen am Außenumfang der Werkzeugscheibe (3) offenen, Drehmitnahmeelemente aufweisenden Sitz (55) aufweist, in den der Antriebsschaft (57) der betreffenden Werkzeugaufnahme (53) einsetzbar ist.

10. Werkzeugrevolver nach Anspruch 9, **dadurch gekennzeichnet, dass** die jeweilige Werkzeugaufnahme (53) einen am Außenumfang der Werkzeugscheibe (3) anbringbaren, vorzugsweise anschraubbaren Werkzeugträgerkörper aufweist, in dem der Antriebsschaft (57) drehbar gelagert ist, der seinerseits einen Sitz (61) zur Bildung einer Antriebsverbindung zwischen Antriebsschaft (57) der Werkzeugaufnahme (53) und einem zugeordneten Werkzeug bildet.

## Claims

1. A tool revolver with a base element (1) attachable or attached to a machine tool which defines a revolver axis (7) about which, mounted rotatably on the base element (1) is a tool disc (3) which has a number of tool stations (17) distributed about its periphery which by turning the tool disc (3) can respectively be set in at least one working position in which a tool drive (19) attached to the base element (1) and located in the inside (15) of the tool disc (3) comes with its drive side coupling part (23) into coupling engagement with a tool side drive part for driving a tool which is located on the tool station (17) aligned to the working position, in each tool station (17) a drive part (25) forming the coupling part on the tool side being rotatably mounted with which the tool retainer (53) of the respective tool operable on the tool station (17) can be brought into drive connection, and on each drive part (25) a seal arrangement (41) being provided which on the respective tool station (17) seals off the inside (15) of the tool disc (3) from the exterior, **characterised in that** each drive part (25) forms over a large part of its axial length a rotation element with a perfectly cylindrical circumference, and that in its end side peripheral section adjacent to the drive side coupling part (23) of the internal tool drive (19) has at least one level guiding surface (43) which is a component part of a locking device fixing the rotational position of the drive part (25) when turning the tool disc (3).

2. The tool revolver according to Claim 1, **characterised in that** the seal arrangement (41) is provided on the outer perfectly cylindrical end region (39) of the drive part (25) adjacent to the outer periphery of the tool disc (3).

3. The tool revolver according to Claim 1 or 2, **characterised in that** as a tool side coupling part on the respective drive part (25) a diametric, continuous groove (49) is provided which is open on the end of the drive part (25) facing towards the interior (15) of the tool disc (3) and the level side walls (51) of which form planes parallel to the at least one guiding surface (43).

4. The tool revolver according to claim 3, **characterised in that** the drive side coupling part (23) of the tool drive (19) located within the tool disc (3) has at least one drive pin with a rectangular cross-section which can be appropriately accommodated in the groove (49) of the drive part and can be moved through the groove (49) upon rotational movements of the tool disc (3).

5. The tool revolver according to Claim 4, **characterised in that** the locking device for the drive parts (25) has a guide element which between the tool stations (17) forms a guideway (45) extending concentrically to the revolver axis (7) and which extends along the path of movement passed through by the respective drive part (25) upon turning the tool disc and along which the respective guiding surface (43) of the drive part (25) is guided adjacently upon turning the tool disc (3).

6. The tool revolver according to Claim 5, **characterised by** a device for the rotational positioning of the drive side coupling part of the tool drive (19) such that the drive pin (23) of the latter brings the drive part (25) into a rotational position in which the side walls (51) of the groove (49) and the respective guiding surface (43) of the drive part (25) lie in planes parallel to the guideway (45).

7. The tool revolver according to Claim 6, **characterised in that** the tool drive located in the inside (15) of the tool disc (3) has an electric motor (19) the rotor shaft (21) of which is concentric to the drive part (25) of the tool station (17) respectively located in the working position and on its shaft end forms the drive pin (23).

8. The tool revolver according to Claim 7, **characterised in that** an electric motor (19) which makes it possible to determine the rotational position of the rotor (21) electrically is provided.

9. The tool revolver according to any of Claims 1 to 8, **characterised in that** in order to form the drive connection to the tool retainer (53) of the tool to be operated on the corresponding tool station (17), each drive part (25) has on the outer periphery of the tool disc (3) an open seat (55) having rotation entrainment elements in which the drive shaft (57) of the corresponding tool retainer (53) can be inserted.

10. The tool revolver according to Claim 9, **characterised in that** the respective tool retainer (53) has a tool support element that can be attached, and preferably screwed, onto the outer periphery of the tool disc (3) and in which the drive shaft (57) is rotatably mounted which in turn forms a seat (61) in order to form a drive connection between the drive shaft (57) of the tool retainer (53) and an allocated tool.

## Revendications

1. Tourelle porte-outil comprenant un corps (1) de base à mettre ou mis sur une machine-outil et définissant un axe (7) de tourelle, autour duquel est monté tournant sur le corps (1) de base un disque (3) à outil, qui a plusieurs postes (17) d'outil répartis sur son pourtour, postes qui, par rotation du disque (3) à outil, peuvent être mis respectivement dans au moins une position de travail dans laquelle un entraînement (19) d'outil, mis sur le corps (1) de base et se trouvant à l'intérieur (15) du disque (3) à outil vient, à sa partie (23) d'embrayage côté entraînement, en prise avec une partie d'entraînement côté outil pour l'entraînement d'un outil qui se trouve sur le poste (17) d'outil, aligné sur la position de travail, dans laquelle, dans chaque poste (17) d'outil, une partie (25) d'entraînement formant la partie d'embrayage côté outil est montée tournante, partie par laquelle le logement (53) de l'outil pouvant fonctionner sur le poste (17) d'outil peut être mis en liaison d'entraînement et dans laquelle sur chaque partie (25) d'entraînement est prévu un dispositif (41) d'étanchéité, qui rend étanche sur le poste (17) d'outil respectif l'intérieur (15) du disque (3) à outil par rapport au côté extérieur, **caractérisée en ce que** chaque partie (25) d'entraînement forme sur une grande partie de sa longueur axiale un corps de révolution ayant un pourtour de section droite cylindrique circulaire et a, dans sa partie périphérique du côté de l'extrémité et voisine de la partie (23) d'embrayage côté entraînement de l'entraînement (19) intérieur d'outil, au moins une surface (43) de guidage plane qui forme une partie d'une sécurité à la torsion fixant la position en rotation de la partie (25) d'entraînement lors de la rotation du disque (3) d'outil.

2. Tourelle porte-outil suivant la revendication 1, **caractérisée en ce que** le dispositif (41) d'étanchéité est prévu sur la zone (39) d'extrémité de la partie (25) d'entraînement, zone qui est extérieure et cylindrique de section droite circulaire, en étant voisine du pourtour extérieur du disque (3) d'outil.

3. Tourelle porte-outil suivant la revendication 1 ou 2, **caractérisée en ce qu'**il est prévu, comme partie d'embrayage côté outil, sur la partie (25) respective d'entraînement, une rainure (49) diamétrale traversante, qui est ouverte à l'extrémité de la partie (25) d'entraînement tournée vers l'intérieur (15) du disque (3) d'outil et dont les parois (51) latérales planes forment des plans parallèles à la au moins une surface (43) de guidage.

4. Tourelle porte-outil suivant la revendication 3, **caractérisée en ce que** la partie (23) d'embrayage, côté entraînement de l'entraînement (19) d'outil se trouvant à l'intérieur du disque (3) d'outil, a au moins un tourillon d'entraînement de section transversale rectangulaire, qui peut être reçu d'une manière adaptée dans la rainure (49) de la partie (25) d'entraînement et qui, lors des mouvements de rotation du disque (3) d'outil, peut se déplacer dans la rainure (49).

5. Tourelle porte-outil suivant la revendication 4, **caractérisée en ce que** le blocage en rotation des parties (25) d'entraînement a un corps de guidage, qui forme entre les postes (17) d'outil une voie (45) de guidage qui s'étend concentriquement à l'axe (7) de la tourelle, qui s'étend le long de la voie de déplacement parcourue par la partie (25) d'entraînement respective lors de la rotation du disque (3) d'outil et le long de laquelle la surface (43) respective du guidage de la partie (25) d'entraînement est guidée en s'y appliquant lors de la rotation du disque (3) à outil.

6. Tourelle porte-outil suivant la revendication 5, **caractérisée par** un dispositif de positionnement en rotation de la partie de couplage côté entraînement de l'entraînement (19) d'outil, tel que son tourillon (23) d'entraînement met la partie (25) d'entraînement dans une position en rotation dans laquelle les parois (51) latérales de la rainure (49) et la surface (43) respective de guidage de la partie (25) d'entraînement se trouvent dans des plans parallèles à la voie (45) de guidage.

7. Tourelle porte-outil suivant la revendication 6, **caractérisée en ce que** l'entraînement d'outil se trouvant à l'intérieur (15) du disque (3) d'outil a un moteur (19) électrique dont l'arbre (21) du rotor est concentrique à la partie (25) d'entraînement du poste (17) d'outil se trouvant dans la position de travail et forme à son bout d'arbre le tourillon (23) d'entraînement.

8. Tourelle porte-outil suivant la revendication 7, **caractérisée en ce qu'**il est prévu un moteur (19) électrique permettant une détermination électrique de la position en rotation du rotor (21).

9. Tourelle porte-outil suivant l'une des revendications 1 à 8, **caractérisée en ce que** chaque partie (25) d'entraînement a, pour la formation de la liaison d'entraînement avec le logement (53) de l'outil à faire fonctionner au poste (17) d'outil concerné, un siège (55) ouvert sur le pourtour extérieur du disque (3) d'outil et ayant des éléments d'entraînement en rotation, siège dans lequel l'arbre (57) d'entraînement du logement (53) d'outil concerné peut être inséré.

10. Tourelle porte-outil suivant la revendication 9, **caractérisée en ce que** le logement (53) respectif d'outil a un corps porte-outil pouvant être mis sur le pourtour extérieur du disque (3) d'outil en pouvant, de préférence, être vissé et dans lequel est monté à rotation l'arbre (57) d'entraînement qui forme, pour sa part, un siège (61) pour la formation d'une liaison d'entraînement entre l'arbre (57) d'entraînement du logement (53) d'outil et un outil associé.
